# EUROPEAN PATENT APPLICATION

(11) **EP 4 471 525 A1**
(43) Date of publication of application: **04.12.2024**
(21) Application number: 23746657.8
(22) Date of filing: 12.01.2023
(51) Int. Cl.: G05D 1/02, G08G 1/16, G06T 7/00, G06T 7/50, G01B 11/00

(54) **INFORMATION PROCESSING DEVICE, INFORMATION PROCESSING METHOD, AND INFORMATION PROCESSING SYSTEM**

(30) Priority: 26.01.2022 JP 2022009919
(71) Applicant: Sony Group Corporation, Tokyo 108-0075 (JP)
(72) Inventor: OGUCHI Ryo, Tokyo 108-0075 (JP)
(74) Representative: Witte, Weller & Partner Patentanwälte mbB
(86) International application number: PCT/JP2023/000520
(87) International publication number: WO 2023/145442

(57) **Abstract**

The present technology relates to an information processing device, an information processing method, and an information processing system that make it possible to improve the accuracy of depth information generated by use of a monocular camera. The information processing device includes a depth information generation unit that generates depth information on the basis of a captured image captured by a monocular camera provided on a vehicle such that the camera is able to capture an image of a road surface, a road surface distance estimation unit that executes an estimation process of a road surface distance that is a distance to the road surface in the captured image, and a depth information correction unit that corrects the depth information on the basis of a result of the estimation of the road surface distance. The present technology can be applied, for example, to a vehicle.

## Description

### [Technical Field]

The present technology relates to an information processing device, an information processing method, and an information processing system, and particularly to an information processing device, an information processing method, and an information processing system that improve the accuracy of depth information generated by use of a monocular camera.

### [Background Art]

Conventionally, a technology has been proposed which uses a learning model to estimate three-dimensional coordinates of a feature point of image data generated by a monocular camera. In particular, a feature point map with depth information generated by use of a stereo camera is used as teacher data to learn a learning model for estimating three-dimensional coordinates of feature points of image data generated by one of cameras of the stereo camera. Then, the learning model is used to estimate three-dimensional coordinates of feature points of image data generated by the monocular camera, and the three-dimensional coordinates are corrected on the basis of a difference in imaging characteristic between the camera used for the learning and the monocular camera (for example, refer to PTL 1).

### [Citation List]

### [Patent Literature]

### [PTL 1]

JP 2021-117130A

### [Summary]

### [Technical Problem]

However, it is assumed that depth information generated by use of a monocular camera disclosed in PTL 1 is inferior in accuracy of the absolute distance of the depth information.

The present technology has been made in view of such a situation as described above and is intended to improve the accuracy of the absolute distance by using an estimation value of a road surface distance to correct depth information generated by use of a monocular camera.

### [Solution to Problem]

An information processing device of a first aspect of the present technology includes a depth information generation unit that generates depth information on the basis of a captured image captured by a monocular camera provided on a vehicle such that the camera is able to capture an image of a road surface, a road surface distance estimation unit that executes an estimation process of a road surface distance that is a distance to the road surface in the captured image, and a depth information correction unit that corrects the depth information on the basis of a result of the estimation of the road surface distance.

An information processing method of the first aspect of the present technology includes generating depth information on the basis of a captured image captured by a monocular camera provided on a vehicle such that the camera is able to capture an image of a road surface, executing an estimation process of a road surface distance that is a distance to the road surface in the captured image, and correcting the depth information on the basis of a result of the estimation of the road surface distance.

An information processing system of a second aspect of the present technology includes a monocular camera provided on a vehicle such that the camera is able to capture an image of a road surface, a depth information generation unit that generates depth information on the basis of a captured image captured by the camera, a road surface distance estimation unit that executes an estimation process of a road surface distance that is a distance to the road surface in the captured image, and a depth information correction unit that corrects the depth information on the basis of a result of the estimation of the road surface distance.

In the first aspect of the present technology, depth information is generated on the basis of a captured image captured by a monocular camera provided on a vehicle such that the camera is able to capture an image of a road surface. Then, an estimation process of a road surface distance that is a distance to the road surface in the captured image is executed, and the depth information is corrected on the basis of a result of the estimation of the road surface distance.

In the second aspect of the present technology, depth information is generated on the basis of a captured image captured by a monocular camera provided on a vehicle such that the camera is able to capture an image of a road surface. Then, an estimation process of a road surface distance that is a distance to the road surface in the captured image is executed, and the depth information is corrected on the basis of a result of the estimation of the road surface distance.

### [Brief Description of Drawings]

[FIG. 1]

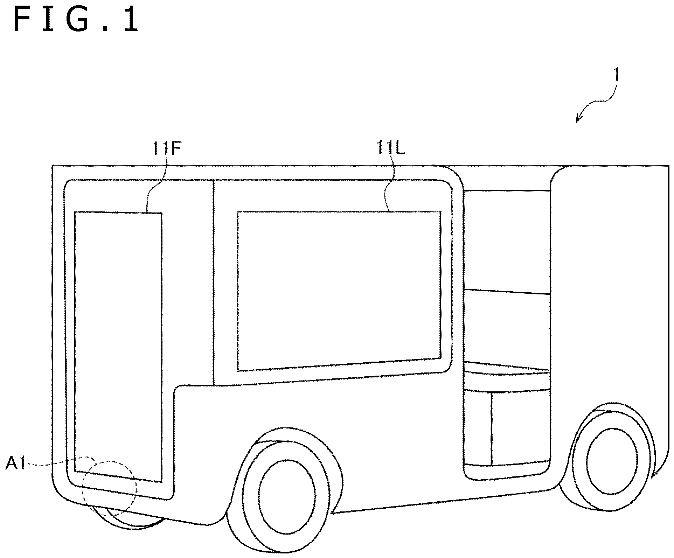

   FIG. 1 is a view depicting an example of a configuration of an appearance of a vehicle to which the present technology is applied.
[FIG. 2]

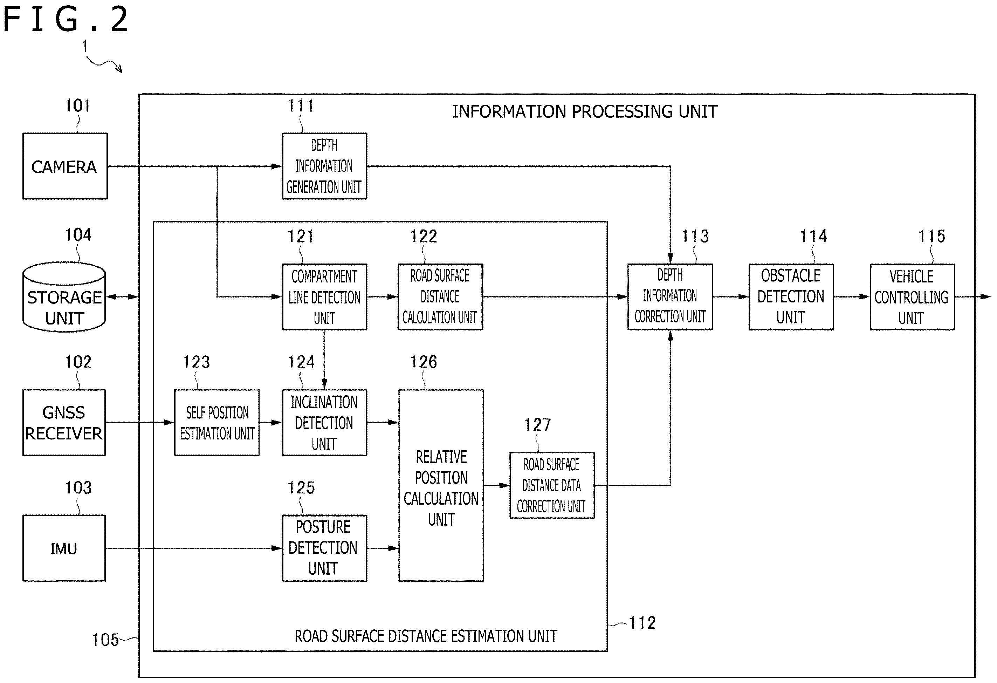

   FIG. 2 is a block diagram depicting a first configuration example of some of functions of the vehicle to which the present technology is applied.
[FIG. 3]

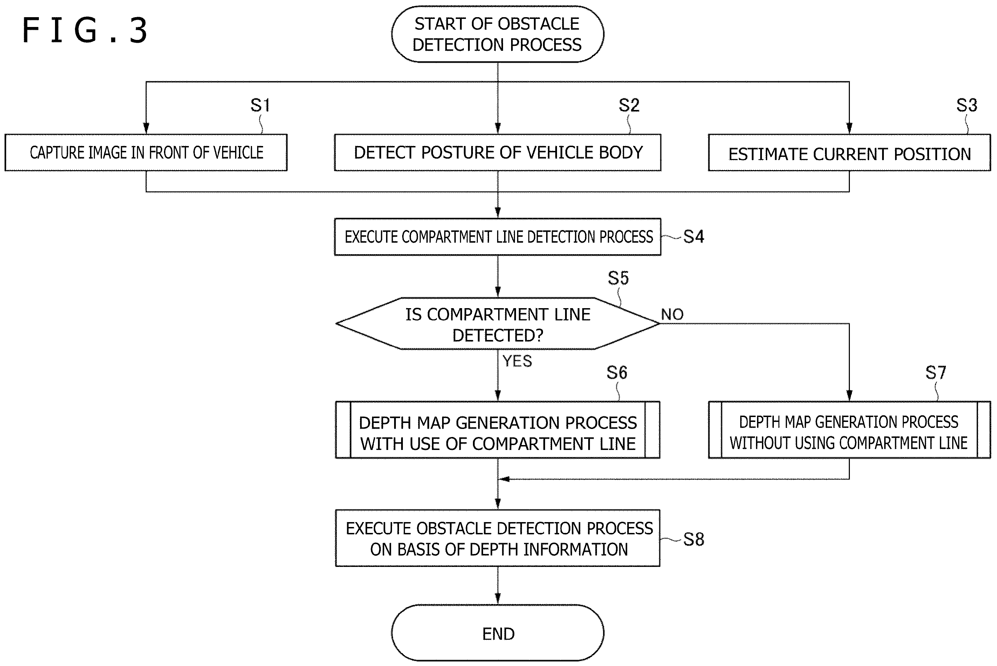

   FIG. 3 is a flow chart illustrating an obstacle detection process.
[FIG. 4]

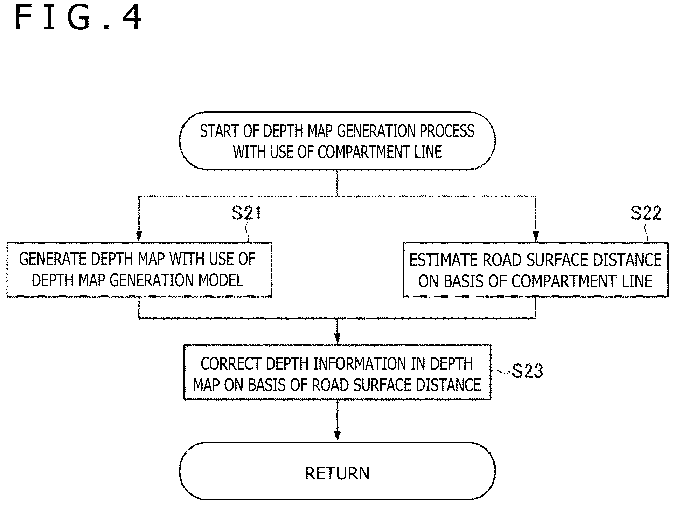

   FIG. 4 is a flow chart illustrating details of a depth map generation process using a compartment line.
[FIG. 5]

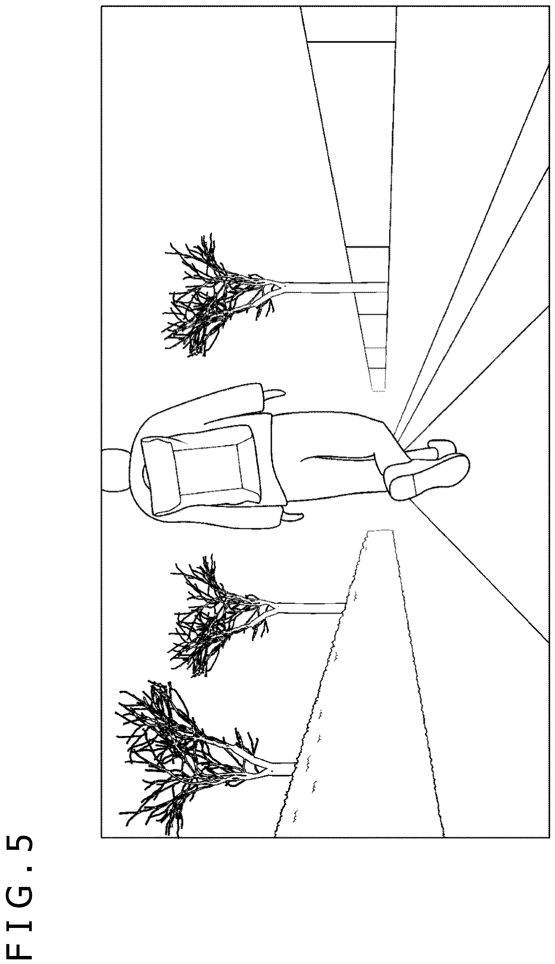

   FIG. 5 is a view depicting an example of a captured image.
[FIG. 6]

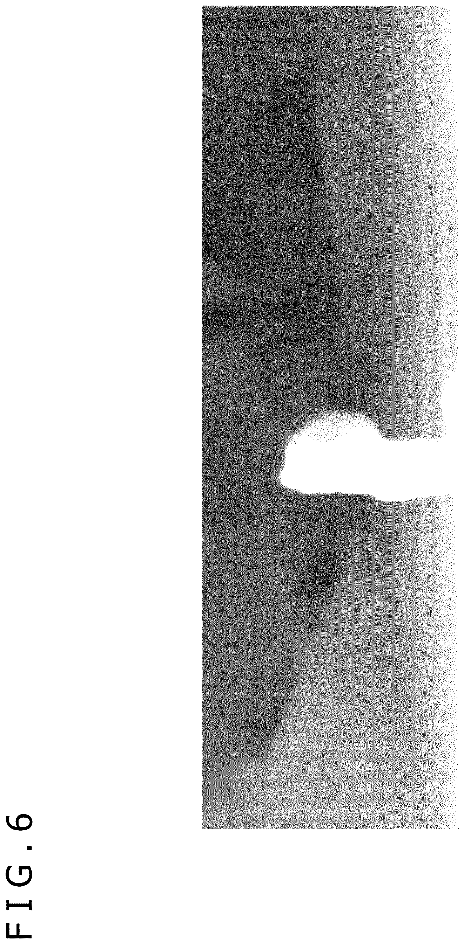

   FIG. 6 is a view depicting an example of a depth map.
[FIG. 7]

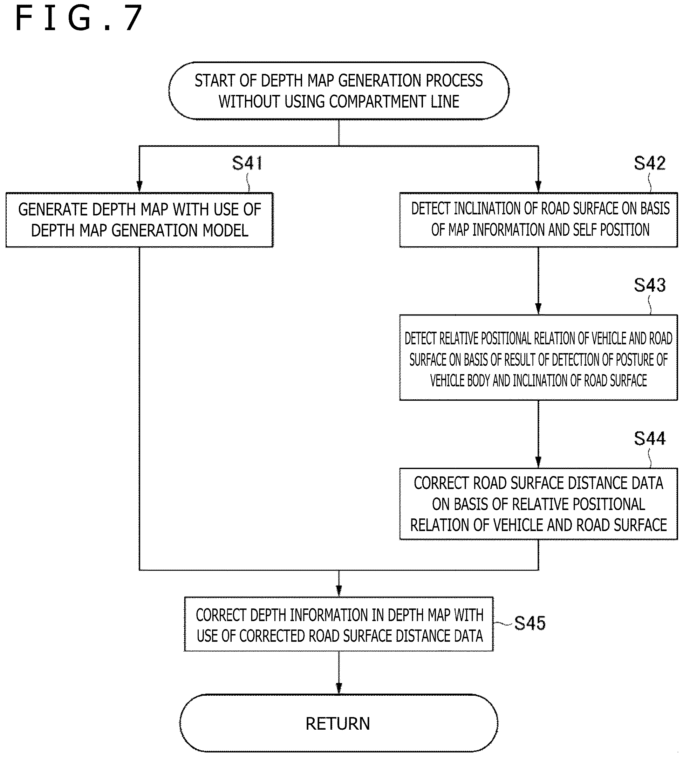

   FIG. 7 is a flow chart illustrating details of a depth map generation process that does not use a compartment line.
[FIG. 8]

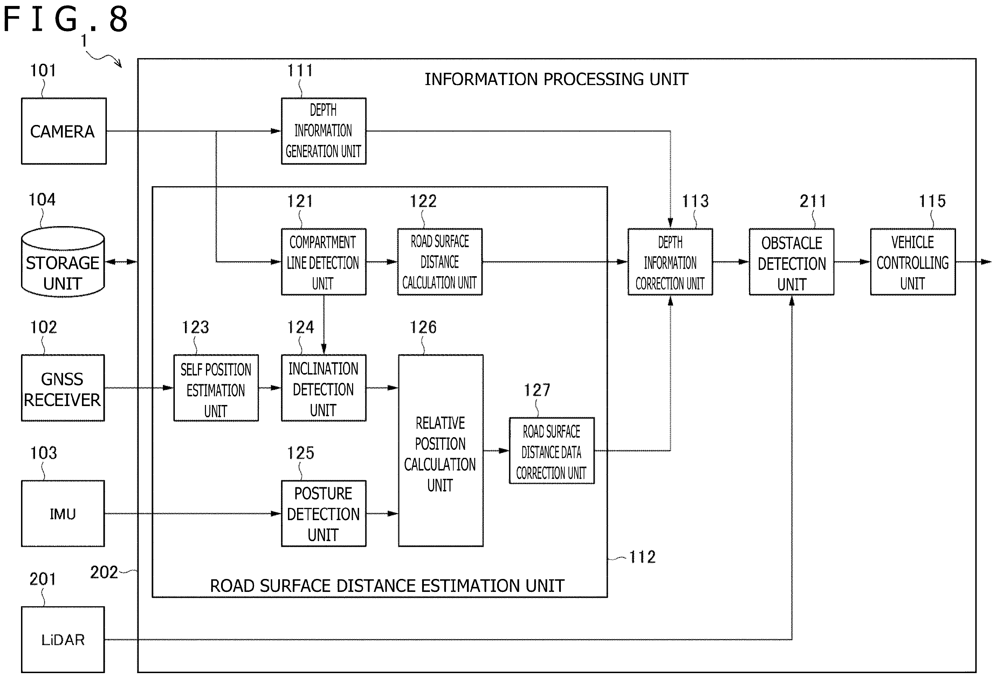

   FIG. 8 is a block diagram depicting a second configuration example of some of functions of the vehicle to which the present technology is applied.
[FIG. 9]

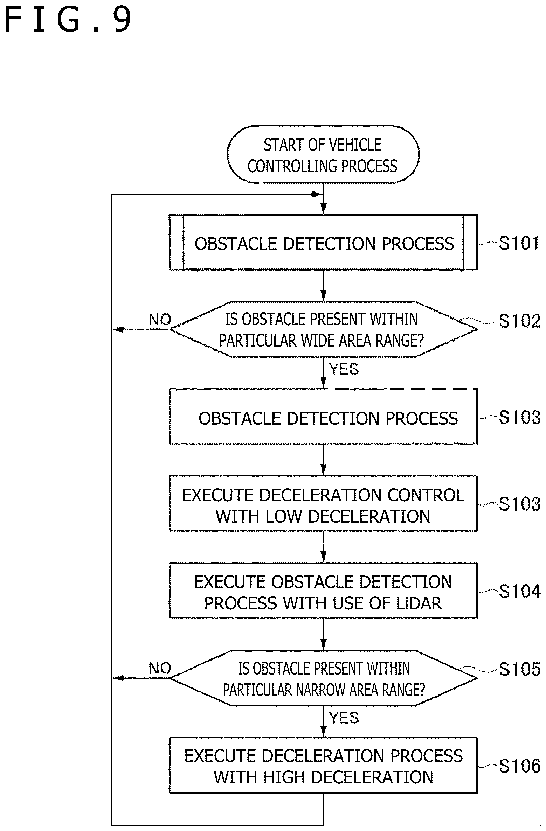

   FIG. 9 is a flow chart illustrating a vehicle controlling process.
[FIG. 10]

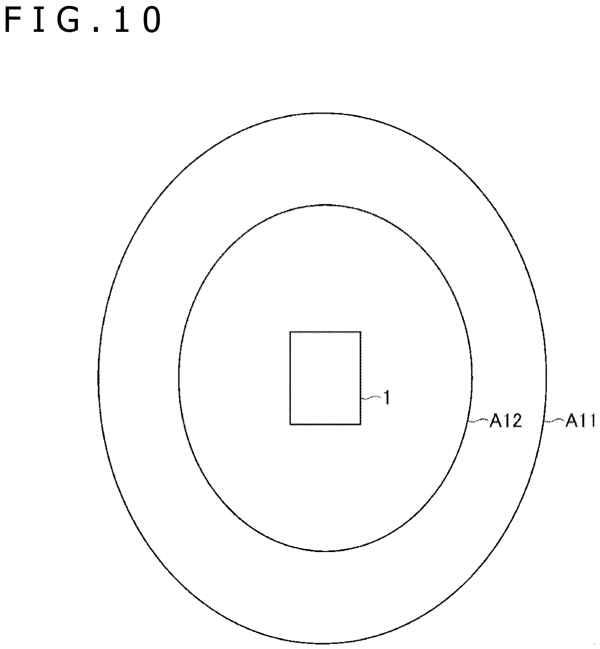

   FIG. 10 is a view depicting an example of a wide area range and a narrow area range.
[FIG. 11]

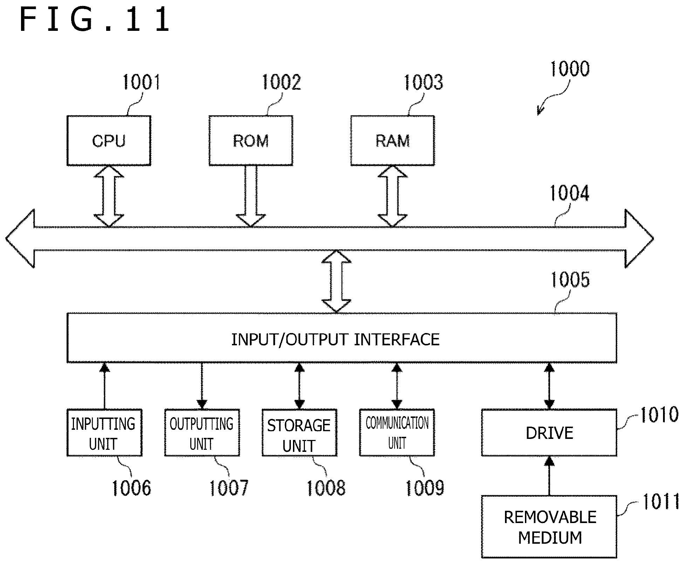

   FIG. 11 is a block diagram depicting an example of a configuration of a computer.

### [Description of Embodiments]

In the following, modes for carrying out the present technology are described. The description is given in the following order:
1. First Embodiment
2. Second Embodiment
3. Modifications
4. Others

### <<1. First Embodiment>>

First, a first embodiment of the present technology is described with reference to FIGS. 1 to 7.

### <Example of Configuration of Vehicle 1>

FIG. 1 depicts an example of a configuration of an appearance where a vehicle 1 to which the present technology is applied is viewed diagonally from the front left.

The vehicle 1 is a moving body capable of moving unattended by automated driving or by remote control.

It is to be noted that a person may be on the vehicle 1 when it moves. Further, the vehicle 1 may be capable of being operated by a driver.

As the vehicle 1, for example, an electric vehicle that moves by a motor such as an electric cart is available. It is to be noted that the vehicle 1 according to the present embodiment is not limited to an electric vehicle.

A display unit 11F, another display unit 11L, a further display unit 11R (not depicted), and a still further display unit 11B (not depicted) are provided on a front face, a left side face, a right side face, and a rear face of the vehicle 1, respectively. The display units 11F to 11B each include a thin display device such as, for example, an LCD (Liquid Crystal Display) or an organic EL panel.

A monocular camera 101 (FIG. 2) is provided in a lower region A1 of the front face of the vehicle 1. The camera 101 is installed such that a road surface in front of the vehicle 1 is included in an angle of view thereof. Consequently, the camera 101 can capture an image of a region including the road surface in front of the vehicle 1.

It is to be noted that a camera other than the camera 101 may be provided on the vehicle 1. For example, cameras may be provided such that they can individually capture images of the left side, right side, and rear of the vehicle 1.

### <First Configuration Example of Functions of Vehicle 1>

FIG. 2 depicts a first configuration example of an information processing system configuring some of functions of the vehicle 1.

The vehicle 1 includes the camera 101, a GNSS (Global Navigation Satellite System) receiver 102, an IMU (Inertial Measurement Unit) 103, a storage unit 104, and an information processing unit 105.

The camera 101 captures an image in front of the vehicle 1 and supplies captured image data indicative of the obtained captured image to the information processing unit 105.

The GNSS receiver 102 receives and supplies GNSS signals from GNSS satellites to the information processing unit 105.

The IMU 103 detects an acceleration and an angular velocity of the vehicle 1 and supplies detection data indicative a result of the detection to the information processing unit 105.

The storage unit 104 stores, for example, map information, road surface distance data, and the like therein.

The map information includes, for example, information relating to an inclination (for example, an inclination angle and an inclination direction) of a road surface of each road or information necessary for detection of an inclination of a road surface of each road.

The road surface distance data is data that indicates a correspondence relation between pixels in a captured image and distances to a road surface (hereinafter referred to as a road surface distance) and that is generated in advance. For example, the road surface data indicates a road surface distance of each pixel in a region (hereinafter referred to as a road surface region) in which a road surface of a captured image captured by the camera 101 during traveling or stopping of the vehicle 1 on a flat road surface appears. The road surface distance of each pixel is represented, for example, by a distance between the origin of a camera coordinate system and the position of the road surface corresponding to the pixel (position of the road surface reflected in the pixel). The road surface distance of each pixel is actually measured, for example.

It is to be noted that, in the road surface distance data, the road surface distance of each pixel outside the road surface region of a captured image is not set, for example.

The information processing unit 105 includes a depth information generation unit 111, a road surface distance estimation unit 112, a depth information correction unit 113, an obstacle detection unit 114, and a vehicle controlling unit 115.

The depth information generation unit 111 generates depth information on the basis of a captured image. More particularly, the depth information generation unit 111 generates a depth map from a captured image by using a depth map generation model. The depth map is configured by mapping depth values corresponding to individual pixels of the captured image as a two-dimensional image. The depth information generation unit 111 supplies the depth map to the depth information correction unit 113.

It is to be noted that the depth map generation model is a model that outputs, when captured image data is inputted thereto, a depth map corresponding to a captured image indicated by the captured image data.

The depth map generation model is learned in advance by machine learning. In particular, machine learning of a depth map generation model is executed by use of learning data with captured image data set as input data and with a depth map indicative of depth values of individual pixels of a captured image indicated by the captured image data set as correct answer data.

It is to be noted that the generation method of correct answer data is not limited to a specific one. For example, correct answer data is generated by use of a stereo camera or a depth sensor.

The road surface distance estimation unit 112 executes an estimation process of a road surface distance in front of the vehicle 1. The road surface distance estimation unit 112 includes a compartment line detection unit 121, a road surface distance calculation unit 122, a self position estimation unit 123, an inclination detection unit 124, a posture detection unit 125, a relative position calculation unit 126, and a road surface distance data correction unit 127.

The compartment line detection unit 121 detects a compartment line of the road surface in front of the vehicle 1 on the basis of a captured image. Such compartment lines include, for example, a road center line at the center of a road, a lane boundary line indicative of a boundary of a lane, a road outside line indicative of an edge line on the outer side of a lane, and so forth. The compartment line detection unit 121 supplies information indicative of a result of the detection of a compartment line to the road surface distance calculation unit 122 and the inclination detection unit 124.

The road surface distance calculation unit 122 calculates a road surface distance in front of the vehicle 1 on the basis of a result of the detection of a compartment line in front of the vehicle 1 to estimate the road surface distance in front of the vehicle 1. The road surface distance calculation unit 122 supplies information indicative of a result of the calculation of the road surface distance to the depth information correction unit 113.

The self position estimation unit 123 estimates the self position of the vehicle 1 on the basis of GNSS signals. The self position estimation unit 123 supplies information indicative a result of the estimation of the self position of the vehicle 1 to the inclination detection unit 124.

The self position estimation unit 123 may estimate the self position of the vehicle 1 by other methods without being limited to the method that is based on GNSS signals. For example, the self position estimation unit 123 may measure the number of rotations of a tire from a start point of the vehicle 1 and calculate a travel distance from the start point to specify the self position. Alternatively, for example, a magnetic sensor that detects magnetism from a magnet marker embedded in the road surface may be provided at a predetermined position on a bottom face or the like of the vehicle 1. Then, the self position estimation unit 123 may acquire position information from the magnet markers embedded in the road surface, to estimate the self position of the vehicle 1.

The inclination detection unit 124 detects an inclination of the road surface around the vehicle 1 on the basis of the self position of the vehicle 1 and map information stored in the storage unit 104. The inclination detection unit 124 supplies information indicative of a result of the detection of an inclination of the road surface around the vehicle 1 to the relative position calculation unit 126.

The posture detection unit 125 detects a posture of the vehicle body of the vehicle 1 on the basis of the acceleration and the angular velocity of the vehicle 1. The posture detection unit 125 supplies information indicative of a result of the detection of a posture of the vehicle body to the relative position calculation unit 126.

The relative position calculation unit 126 calculates a relative position of the vehicle 1 and the road surface in front of the vehicle 1 on the basis of the inclination of the road surface around the vehicle 1 and the posture of the vehicle body. The relative position calculation unit 126 supplies information indicative of a result of the calculation of the relative position of the vehicle 1 and the road surface in front of the vehicle 1 to the road surface distance data correction unit 127.

The road surface distance data correction unit 127 corrects the road surface distance data stored in the storage unit 104, on the basis of the relative position of the vehicle 1 and the road surface in front of the vehicle 1, to estimate the road surface distance in front of the vehicle 1. The road surface distance data correction unit 127 supplies the corrected road surface distance data to the depth information correction unit 113.

The depth information correction unit 113 corrects the depth information in the depth map on the basis of the road surface distance calculated by the road surface distance calculation unit 122 or on the basis of the corrected road surface distance data. The depth information correction unit 113 supplies the corrected depth information to the obstacle detection unit 114.

The obstacle detection unit 114 executes a detection process of an obstacle in front of the vehicle 1 on the basis of the corrected depth information. The obstacle detection unit 14 supplies information indicative of a result of the detection of an obstacle to the vehicle controlling unit 115.

The vehicle controlling unit 115 controls operation of the vehicle 1 on the basis of a result of the detection of an obstacle in front of the vehicle 1.

### <Obstacle Detection Process>

Now, an obstacle detection process executed by the vehicle 1 is described with reference to a flow chart of FIG. 3. This process is started, for example, when the power supply to the vehicle 1 is turned on and is ended, for example, when the power supply is turned off.

First, processes in steps S1 to S3 are executed in parallel.

In particular, in step S1, the camera 101 captures an image in front of the vehicle 1. The camera 101 supplies captured image data obtained as a result of the image capturing to the depth information generation unit 111 and the compartment line detection unit 121.

In step S2, the vehicle 1 detects a posture of the vehicle body. In particular, the IMU 103 detects an acceleration and an angular speed of the vehicle 1 and supplies detection data indicative of a result of the detection to the posture detection unit 125. The posture detection unit 125 detects a posture of the vehicle body on the basis of the acceleration and the angular speed of the vehicle 1. The posture detection unit 125 supplies information indicative of a result of the detection of the posture of the vehicle body to the relative position calculation unit 126.

In step S3, the vehicle 1 estimates a current position. In particular, the GNSS receiver 102 receives GNSS signals from GNSS satellites and supplies the GNSS signals to the self position estimation unit 123. The self position estimation unit 123 estimates a self position of the vehicle 1 on the basis of the GNSS signals and supplies a result of the estimation of the self position of the vehicle 1 to the inclination detection unit 124.

After the processes in steps S1 to S3, the processing advances to step S4.

In step S4, the compartment line detection unit 121 executes a compartment line detection process. In particular, the compartment line detection unit 121 executes a detection process of a compartment line of the road surface in front of the vehicle 1 in the captured image. It is to be noted that the method for the compartment line detection process is not limited to a specific one.

In step S5, the compartment line detection unit 121 determines on the basis of a result of the process in step S4 whether or not a compartment line is detected. In a case where it is determined that a compartment line is detected, the processing advances to step S6.

In step S6, the information processing unit 105 executes a depth map generation process using the compartment line, and thereafter, the processing advances to step S8.

Here, details of the depth map generation process using a compartment line is described with reference to a flow chart of FIG. 4.

First, processes in steps S21 and S22 are executed in parallel.

In particular, in step S21, the depth information generation unit 111 generates a depth map by using a depth map generation model. In particular, the depth information generation unit 111 inputs the captured image data to the depth map generation model and acquires a depth map generated on the basis of the captured image data according to the depth map generation model.

FIG. 5 schematically depicts an example of a captured image indicated by captured image data inputted to the depth map generation model.

FIG. 6 depicts an example of a depth image obtained by creating a monochromatic image of the depth map generated according to the depth map generation model with respect to the captured image of FIG. 5. In this depth image, the pixel becomes whiter (becomes brighter) as the depth value thereof decreases, while the pixel becomes blacker (becomes darker) as the depth value thereof increases. However, in this depth image, since the gradation of the depth value is lowered from that of the original depth map, the image is slightly rougher.

The depth information generation unit 111 supplies the generated depth map to the depth information correction unit 113.

It is to be noted that the depth value of each pixel of the depth map is substantially proportional to the distance to the position corresponding to the pixel. Meanwhile, the depth value of each pixel of the depth map sometimes suffers from an error from the distance to the position corresponding to each pixel. Accordingly, although it is possible to recognize a positional relation of an object in front of the vehicle 1 almost accurately on the basis of the depth map, an accurate position of the object in front of the vehicle 1 cannot sometimes be recognized.

Meanwhile, in step S22, the vehicle 1 estimates a road surface distance on the basis of the compartment line. In particular, the compartment line detection unit 121 supplies information indicative of a result of the detection of the compartment line to the road surface distance calculation unit 122.

The road surface distance calculation unit 122 estimates a road surface distance on the basis of the compartment line.

It is to be noted that the estimation method of a road surface distance is not limited to a specific one. For example, the road surface distance calculation unit 122 may use an existing estimation method or may use a novel estimation method.

For example, the road surface distance calculation unit 122 detects a vanishing point of the road on the basis of the compartment line and estimates a road surface distance on the basis of the vanishing point.

For example, the road surface distance calculation unit 122 detects a shape and a feature point of the compartment line and estimates a road surface distance on the basis of the shape and the feature point of the compartment line.

It is to be noted that the road surface distance calculation unit 122 may not necessarily estimate a road surface distance of the overall road surface, and it is sufficient if the road surface distance calculation unit 122 estimates a road surface distance of a predetermined number of pixels or more of the captured image.

After the processes in steps S21 and S22, the processing advances to step S23.

In step S23, the depth information correction unit 113 corrects the depth information in the depth map on the basis of the road surface distance. In particular, the depth information correction unit 113 corrects the depth information in the depth map on the basis of a correspondence relation between the depth value of each pixel in the depth map and the road surface distance of the pixel in regard to which the road surface distance is estimated in the captured image.

In particular, the depth information correction unit 113 detects, on the basis of the road surface distances of the pixels in regard to which the road surface distances are estimated in the captured image and the corresponding depth values of the pixels of the depth map, a correspondence relation between the depth value of the depth map and the actual distance. For example, since the depth value of the depth map varies substantially in proportion to the actual distance, the depth information correction unit 113 generates a primary conversion formula for converting a depth value into an actual distance.

The depth information correction unit 113 updates the depth value of each pixel of the depth map to an actual distance on the basis of the generated conversion formula to correct the depth information in the depth map. The depth information correction unit 113 supplies the corrected depth information to the obstacle detection unit 114.

Thereafter, the depth map generation process with use of a compartment line is ended.

Referring back to FIG. 3, in a case where it is determined in step S5 that a compartment line is not detected, the processing advances to step S7.

In step S7, the information processing unit 105 executes a depth map generation process without using a compartment line, and the processing advances to step S8.

Here, details of the depth map generation process without using a compartment line are described with reference to a flow chart of FIG. 7.

First, a process in step S41 and processes in steps S42 to S44 are executed in parallel.

In particular, in step S41, a depth map is generated by use of a depth map generation model, as in the process in step S21 of FIG. 4.

Thereafter, the processing advances to step S45.

Meanwhile, in step S42, the vehicle 1 detects an inclination of the road surface on the basis of the map information and the self position. In particular, the compartment line detection unit 121 notifies the inclination detection unit 124 that a compartment line is not detected from the road surface in front of the vehicle 1.

The inclination detection unit 124 reads out map information around the vehicle 1 from the storage unit 104. The inclination detection unit 124 detects an inclination of the road surface around the vehicle 1 on the basis of the map information and the self position of the vehicle 1. In particular, for example, the inclination detection unit 124 detects an inclination direction and an inclination angle of the road surface in front of the vehicle 1 in a world coordinate system. The inclination detection unit 124 supplies information indicative of the inclination direction and the inclination angle of the road surface in front of the vehicle 1 in the world coordinate system to the relative position calculation unit 126.

In step S43, the relative position calculation unit 126 detects a relative positional relation of the vehicle 1 and the road surface on the basis of the result of the detection of the posture of the vehicle body and the inclination of the road surface. In particular, for example, the relative position calculation unit 126 converts, on the basis of the posture of the vehicle body, the inclination direction and the inclination angle of the road surface in front of the vehicle 1 in the world coordinate system into an inclination direction and an inclination angle of the road surface in front of the vehicle 1 in the camera coordinate system of the camera 101. The relative position calculation unit 126 supplies information indicative of the inclination direction and the inclination angle of the road surface in front of the vehicle 1 in the camera coordinate system to the road surface distance data correction unit 127.

In step S44, the road surface distance data correction unit 127 corrects the road surface distance data on the basis of the relative positional relation of the vehicle 1 and the road surface. In particular, the road surface distance data correction unit 127 calculates a road surface distance in front of the vehicle 1 on the basis of the inclination direction and the inclination angle of the road surface around the vehicle 1 in the camera coordinate system. The road surface distance data correction unit 127 corrects the road surface distance data on the basis of the calculated road surface distance in front of the vehicle 1. The road surface distance data correction unit 127 supplies the corrected road surface distance data to the depth information correction unit 113.

Thereafter, the processing advances to step S45.

In step S45, the depth information correction unit 113 corrects the depth information in the depth map by using the corrected road surface distance data. In particular, the depth information correction unit 113 corrects the depth information in the depth map on the basis of the correspondence relation between the depth values of the pixels in the depth map and the road surface distances of the pixels of the corrected road surface distance data.

In particular, the depth information correction unit 113 detects, on the basis of the depth values of the pixels in the corresponding road surface region of the depth map and the road surface distances of the pixels in the corrected road surface distance data, a correspondence relation between the depth values in the depth map and the actual distances. For example, since the depth value in the depth map varies in proportion to the actual distance, the depth information correction unit 113 generates a primary conversion formula for converting a depth value into an actual distance.

The depth information correction unit 113 updates the depth values in the depth map to the actual distances on the basis of the generated conversion formula to correct the depth information in the depth map. The depth information correction unit 113 supplies the corrected depth information to the obstacle detection unit 114.

Thereafter, the depth map generation process without using a compartment line is ended.

Referring back to FIG. 3, in step S8, the obstacle detection unit 114 executes an obstacle detection process on the basis of the depth information. The obstacle detection unit 114 supplies information indicative of a result of the detection of an obstacle to the vehicle controlling unit 115.

It is to be noted that the method for the obstacle detection process is not limited to a specific one. Further, for example, the obstacle detection unit 114 may execute the obstacle detection process by using a captured image in addition to the depth map.

Thereafter, the obstacle detection process is ended.

The accuracy of depth information generated on the basis of a captured image captured by use of the monocular camera 101 can be improved in such a manner as described above. For example, the accuracy of depth information in regard to an object that is not in contact with the road surface can be improved.

Further, use of depth information of high accuracy improves the detection accuracy of an obstacle.

### <<2. Second Embodiment>>

Now, a second embodiment of the present technology is described with reference to FIGS. 8 to 10.

### <Second Configuration Example of Functions of Vehicle 1>

FIG. 8 depicts a second configuration example of an information processing system that configures some of functions of the vehicle 1. It is to be noted that elements corresponding to those depicted in FIG. 2 are denoted by like reference signs, and description of them is suitably omitted.

The vehicle 1 in FIG. 8 is different in comparison with the vehicle 1 in FIG. 2 in that a LiDAR 201 is additionally provided and an information processing unit 202 is provided in place of the information processing unit 105. The information processing unit 202 is different in comparison with the information processing unit 105 in that an obstacle detection unit 211 is provided in place of the obstacle detection unit 114.

The LiDAR 201 scans in front of the vehicle 1 by using a laser beam to generate three-dimensional point group data indicative of a distribution of objects in front of the vehicle 1 and supplies the three-dimensional point group data to the obstacle detection unit 211.

The obstacle detection unit 211 executes an obstacle detection process by using a depth map or the point group data. The obstacle detection unit 211 supplies information indicative of a result of the detection of obstacles to the vehicle controlling unit 115.

### <Vehicle Controlling Process>

Now, a vehicle controlling process executed by the vehicle 1 of FIG. 8 is described with reference to a flow chart of FIG. 9. This process is started, for example, when the power supply to the vehicle 1 is turned on, and is ended, for example, when the power supply is turned off.

In step S101, the obstacle detection process described hereinabove with reference to FIG. 3 is executed. In particular, the obstacle detection process that uses a captured image captured by the monocular camera 101 is executed.

In step S102, the obstacle detection unit 211 determines on the basis of a result of the process in step S101 whether or not an obstacle is present within a particular wide area range.

FIG. 10 depicts an example of a wide area range A11 and a narrow area range A12 around the vehicle 1.

The wide area range A11 is set, for example, to a range within which an obstacle can be detected by cameras including the camera 101 that capture an image around the vehicle 1.

The narrow area range A12 is set to a range that is narrower than the wide area range A11 and in which, for example, an obstacle can be detected by LiDAR including the LiDAR 201 that scans around the vehicle 1.

In a case where it is determined that an obstacle is not present in the particular wide area range, the processing returns to step S101. After then, the processes in steps S101 and S102 are executed repeatedly until it is determined in step S102 that an obstacle is present within the particular wide area range.

On the other hand, in a case where it is determined in step S102 that an obstacle is present within the particular wide area range, the processing advances to

### step S103.

In step S103, the vehicle controlling unit 115 executes deceleration control with a low deceleration. In particular, the obstacle detection unit 211 supplies information indicative of a result of the detection of an obstacle to the vehicle controlling unit 115.

The vehicle controlling unit 115 decelerates the vehicle 1, for example, with a deceleration equal to or lower than a deceleration D1 such that collision and contact of the vehicle 1 with the obstacle are avoided.

In step S104, the vehicle 1 executes the obstacle detection process by use of the LiDAR 201.

In particular, the LiDAR 201 scans in front of the vehicle 1 with a laser beam to generate three-dimensional point group data. The LiDAR 201 supplies the generated point group data to the obstacle detection unit 211.

The obstacle detection unit 211 executes a detection process of an obstacle in front of the vehicle 1 on the basis of the point group data. It is to be noted that the detection method of an obstacle by use of the point group data is not limited to a specific one.

In step S105, the obstacle detection unit 211 determines on the basis of a result of the process in step S104 whether or not an obstacle is present within a particular narrow area range. In a case where it is determined that an obstacle is not present in the particular narrow area range, the processing returns to step S101.

After then, the processes in steps S101 to S105 are executed repeatedly until it is determined in step S105 that an obstacle is present within the particular narrow area range.

On the other hand, in a case where it is determined in step S105 that an obstacle is present within the particular narrow area range, the processing advances to step S106.

In step S106, the vehicle controlling unit 115 executes deceleration control with a high deceleration. In particular, the obstacle detection unit 211 supplies information indicative of a result of the detection of an obstacle to the vehicle controlling unit 115.

The vehicle controlling unit 115 decelerates the vehicle 11, for example, with a deceleration equal to or lower than a deceleration D2 that is higher than the deceleration D1, in such a manner that collision and contact of the vehicle 1 with the obstacle are avoided. In particular, the deceleration control is executed with a higher deceleration in comparison with that in the process in step S103 because the obstacle is present in the proximity of the vehicle 1.

Thereafter, the processing returns to step S101, and the processes in the steps subsequent to step S101 are executed.

The detection accuracy of an obstacle is improved by use of the camera 101 and the LiDAR 201 in such a manner as described above, thereby allowing the vehicle 1 to travel in safe.

### <<3. Modifications>>

In the following, modifications of the embodiments of the present technology described above are described.

The present technology can be applied not only to a case in which a depth map in front of the vehicle 1 is generated but also to a case in which a depth map around the vehicle 1 is generated.

The present technology can be applied also to a case in which depth information other than a depth map is generated on the basis of a captured image captured by a monocular camera. For example, the present technology can be applied also to a case in which depth information indicative of a depth value of a feature point in a captured image is generated.

The self position estimation method of the vehicle 1 by the self position estimation unit 123 is not limited to the method described above. For example, it is possible to adopt a method of SLAM (Simultaneous Localization and Mapping) or the like.

### <<4. Others>>

### <Example of Configuration of Computer>

While the series of processes described above can be executed by hardware, it may otherwise be executed by software. In a case where the series of processes is executed by software, a program that constructs the software is installed into a computer. The computer here includes a computer incorporated in hardware for exclusive use, a personal computer, for example, for universal use that can execute various functions by installing various programs into the personal computer, and so forth.

FIG. 11 is a block diagram depicting an example of a hardware configuration of a computer that executes the series of processes described hereinabove according to a program.

In a computer 1000, a CPU (Central Processing Unit) 1001, a ROM (Read Only Memory) 1002, and a RAM (Random Access Memory) 1003 are connected to one another by a bus 1004.

Further, an input/output interface 1005 is connected to the bus 1004. An inputting unit 1006, an outputting unit 1007, a storage unit 1008, a communication unit 1009, and a drive 1010 are connected to the input/output interface 1005.

The inputting unit 1006 includes, for example, an input switch, a button, a microphone, an image capturing element, and so forth. The outputting unit 1007 includes a display, a speaker, and so forth. The storage unit 1008 includes a hard disk, a nonvolatile memory, or the like. The communication unit 1009 includes a network interface or the like. The drive 1010 drives a removable medium 1011 such as a magnetic disk, an optical disk, a magnetooptical disk, or a semiconductor memory.

In the computer 1000 configured in such a manner as described above, the CPU 1001 loads a program recorded, for example, in the storage unit 1008 into the RAM 1003 through the input/output interface 1005 and the bus 1004 and executes the program to carry out the series of processes described above.

The program to be executed by the computer 1000 (CPU 1001) can be recorded on and provided as a removable medium 1011, for example, in the form of a package medium or the like. Also, the program can be provided through a wired or wireless transmission medium such as a local area network, the Internet, or a digital satellite broadcast.

In the computer 1000, the program can be installed into the storage unit 1008 through the input/output interface 1005 by loading the removable medium 1011 into the drive 1010. Further, the program can be received by the communication unit 1009 through a wired or wireless transmission medium and installed into the storage unit 1008. Also, it is possible to install the program in the ROM 1002 or the storage unit 1008 in advance.

It is to be noted that the program to be executed by the computer may be a program in which the processes are carried out chronologically in the order described in the present specification or a program in which the processes are executed in parallel or executed at a necessary timing when, for example, the program is called.

Note that, in the present specification, "system" means an aggregation of multiple components (devices, modules (parts), or the like), and it does not matter whether all the components are in the same housing or not. Hence, multiple devices that are accommodated in separate housings and connected to each other via a network and a single device including multiple modules accommodated in a single housing are both "system."

Further, the embodiment of the present technology is not limited to the embodiments described above, and various modifications can be made without departing from the gist of the present technology.

For example, the present technology can be configured as cloud computing in which a single function is shared and processed by multiple devices via a network.

Further, the steps of the flowcharts described above can be executed by a single device or shared and executed by multiple devices.

Furthermore, in a case where multiple processing processes are included in a single step, the multiple processing processes included in the single step can be executed by a single device or shared and executed by multiple devices.

### <Example of Combination of Components>

The present technology can also take such configurations as described below.

(1) An information processing device including:
   a depth information generation unit that generates depth information on the basis of a captured image captured by a monocular camera provided on a vehicle such that the camera is able to capture an image of a road surface;
   a road surface distance estimation unit that executes an estimation process of a road surface distance that is a distance to the road surface in the captured image; and
   a depth information correction unit that corrects the depth information on the basis of a result of the estimation of the road surface distance.
(2) The information processing device according to (1) above, in which
   the road surface distance estimation unit corrects, in the estimation process of the road surface distance, road surface distance data, which is generated in advance and which indicates a correspondence relation between each pixel of the captured image and the road surface distance, on the basis of a relative position of the vehicle and the road surface, and
   the depth information correction unit corrects the depth information on the basis of the corrected road surface distance data.
(3) The information processing device according to (2) above, in which
   the road surface distance estimation unit detects a tilt of a vehicle body of the vehicle and an inclination of the road surface around the vehicle, and calculates a relative position of the vehicle and the road surface on the basis of a result of the detection of the tilt of the vehicle body and the inclination of the road surface.
(4) The information processing device according to (3) above, in which
   the road surface distance estimation unit detects the inclination of the road surface on the basis of a current position of the vehicle and map information around the vehicle.
(5) The information processing device according to any one of (2) to (4) above, in which
   the depth information is information in a depth map in which depth values corresponding to the pixels of the captured image are mapped as a two-dimensional image, and
   the depth information correction unit corrects the depth values of the depth map on the basis of the road surface distances of the pixels of the corrected road surface distance data.
(6) The information processing device according to any one of (2) to (5) above, in which,
   in a case where a compartment line of the road surface is not present in the captured image, the road surface distance estimation unit corrects the road surface distance data on the basis of a relative position of the camera and the road surface, and,
   in a case where a compartment line of the road surface is present in the captured image, the road surface distance estimation unit estimates the road surface distance on the basis of the compartment line of the road surface.
(7) The information processing device according to any one of (1) to (6) above, in which
   the road surface distance estimation unit generates the depth information on the basis of the captured image by using a model learned by machine learning.
(8) The information processing device according to any one of (1) to (7) above, further including:
   an obstacle detection unit that detects an obstacle on the basis of the corrected depth information.
(9) The information processing device according to (1) above, in which
   the depth information is a depth value for each pixel of the captured image.
(10) An information processing method including:
   generating depth information on the basis of a captured image captured by a monocular camera provided on a vehicle such that the camera is able to capture an image of a road surface;
   executing an estimation process of a road surface distance that is a distance to the road surface in the captured image; and
   correcting the depth information on the basis of a result of the estimation of the road surface distance.
(11) An information processing system including:
   a monocular camera provided on a vehicle such that the camera is able to capture an image of a road surface;

   a depth information generation unit that generates depth information on the basis of a captured image captured by the camera;
   a road surface distance estimation unit that executes an estimation process of a road surface distance that is a distance to the road surface in the captured image; and
   a depth information correction unit that corrects the depth information on the basis of a result of the estimation of the road surface distance.

It is to be noted that the effects described in the present specification are mere examples, and thus, are not limitative. Any other effect may be provided.

### [Reference Signs List]

1: Vehicle
101: Camera
103: IMU
105: Information processing unit
111: Depth information generation unit
112: Road surface distance estimation unit
113: Depth information correction unit
114: Obstacle detection unit
115: Vehicle controlling unit
121: Compartment line detection unit
122: Road surface distance calculation unit
123: Self position estimation unit
124: Inclination detection unit
125: Posture detection unit
126: Relative position calculation unit
127: Road surface distance data correction unit
201: LiDAR
202: Information processing unit
211: Obstacle detection unit

## Claims

1. An information processing device comprising:
a depth information generation unit that generates depth information on a basis of a captured image captured by a monocular camera provided on a vehicle such that the camera is able to capture an image of a road surface;
a road surface distance estimation unit that executes an estimation process of a road surface distance that is a distance to the road surface in the captured image; and
a depth information correction unit that corrects the depth information on a basis of a result of the estimation of the road surface distance.

2. The information processing device according to claim 1, wherein
the road surface distance estimation unit corrects, in the estimation process of the road surface distance, road surface distance data, which is generated in advance and which indicates a correspondence relation between each pixel of the captured image and the road surface distance, on a basis of a relative position of the vehicle and the road surface, and
the depth information correction unit corrects the depth information on a basis of the corrected road surface distance data.

3. The information processing device according to claim 2, wherein
the road surface distance estimation unit detects a tilt of a vehicle body of the vehicle and an inclination of the road surface around the vehicle, and calculates a relative position of the vehicle and the road surface on a basis of a result of the detection of the tilt of the vehicle body and the inclination of the road surface.

4. The information processing device according to claim 3, wherein
the road surface distance estimation unit detects the inclination of the road surface on a basis of a current position of the vehicle and map information around the vehicle.

5. The information processing device according to claim 2, wherein
the depth information is information in a depth map in which depth values corresponding to the pixels of the captured image are mapped as a two-dimensional image, and
the depth information correction unit corrects the depth values of the depth map on a basis of the road surface distances of the pixels of the corrected road surface distance data.

6. The information processing device according to claim 2, wherein,
in a case where a compartment line of the road surface is not present in the captured image, the road surface distance estimation unit corrects the road surface distance data on a basis of a relative position of the camera and the road surface, and the depth information correction unit corrects the depth information on a basis of the corrected road surface distance data, and,
in a case where a compartment line of the road surface is present in the captured image, the road surface distance estimation unit estimates the road surface distance on a basis of the compartment line of the road surface, and the depth information correction unit corrects the depth information on a basis of a result of the estimation of the road surface distance.

7. The information processing device according to claim 1, wherein
the road surface distance estimation unit generates the depth information on a basis of the captured image by using a model learned by machine learning.

8. The information processing device according to claim 1, further comprising:
an obstacle detection unit that detects an obstacle on a basis of the corrected depth information.

9. The information processing device according to claim 1, wherein
the depth information is a depth value for each pixel of the captured image.

10. An information processing method comprising:
generating depth information on a basis of a captured image captured by a monocular camera provided on a vehicle such that the camera is able to capture an image of a road surface;
executing an estimation process of a road surface distance that is a distance to the road surface in the captured image; and
correcting the depth information on a basis of a result of the estimation of the road surface distance.

11. An information processing system comprising:
a monocular camera provided on a vehicle such that the camera is able to capture an image of a road surface;
a depth information generation unit that generates depth information on a basis of a captured image captured by the camera;
a road surface distance estimation unit that executes an estimation process of a road surface distance that is a distance to the road surface in the captured image; and
a depth information correction unit that corrects the depth information on a basis of a result of the estimation of the road surface distance.
